# EUROPÄISCHE PATENTSCHRIFT

(11) **EP 0 976 646 B1**
(45) Veröffentlichungstag und Bekanntmachung des Hinweises auf die Patenterteilung: **24.09.2003**
(21) Anmeldenummer: 99250244.3
(22) Anmeldetag: 22.07.1999
(51) Int. Cl.: B62D 65/00, B60J 1/17

(54) **Verfahren und Vorrichtung zum Verbinden einer Fensterscheibe mit einem Fensterheber**
Device and method to connect a window sheet to a window regulator
Méthode et dispositif pour fixer un panneau de fenêtre avec un lève-vitre

(30) Priorität: 30.07.1998 DE 19836077
(43) Veröffentlichungstag der Anmeldung: 02.02.2000
(73) Patentinhaber: Brose Fahrzeugteile GmbH & Co. KG, 96450 Coburg (DE)
(72) Erfinder: Saunus, Christian, Dipl.-Ing., 08223 Grünbach (DE); Sträng, Jörgen, S-42677 Västra Frölunda (SE)
(74) Vertreter: Baumgärtel, Gunnar, Dr.

(56) Entgegenhaltungen:
- PATENT ABSTRACTS OF JAPAN vol. 018, no. 605 (M-1706), 17. November 1994 (1994-11-17) & JP 06 227460 A (MAZDA MOTOR CORP), 16. August 1994 (1994-08-16)
- PATENT ABSTRACTS OF JAPAN vol. 017, no. 430 (M-1460), 10. August 1993 (1993-08-10) & JP 05 092761 A (DAIFUKU CO LTD), 16. April 1993 (1993-04-16)
- PATENT ABSTRACTS OF JAPAN vol. 1997, no. 12, 25. Dezember 1997 (1997-12-25) & JP 09 207845 A (MAZDA MOTOR CORP), 12. August 1997 (1997-08-12)

## Beschreibung

Die Erfindung betrifft ein Verfahren und eine Vorrichtung zum Verbinden einer Fensterscheibe mit einem in der Türkarosserie einer Fahrzeugtür angeordneten Fensterheber. Ein derartiges Verfahren wird z.B. in der Patentschrift JP-A-09 207 845 beschrieben.

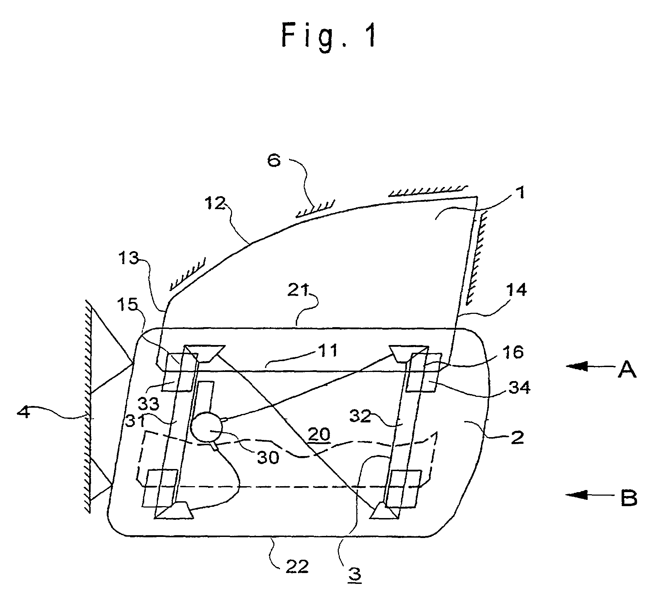

Bei der Montage einer Fahrzeugtür 2 gemäß Figur 1 wird die Fahrzeugtür 2 mittels einer Transporteinrichtung 4 entlang einer Montagestraße bewegt und zunächst einen Fensterheber 3 in Form eines in Figur 1 dargestellten Seil-Fensterhebers oder eines Kreuzarm-Fensterhebers in die Türkarosserie 20 der Fahrzeugtür 2 eingesetzt und mit einem Innenblech, Trägerblech oder Türmodul der Fahrzeugtür 2 verbunden. Vor dem Verbinden des Fensterhebers 3 mit einer Fensterscheibe 1 werden die in Führungsschienen 31, 32 geführten Mitnehmer 33, 34 des Fensterhebers 3 in eine der Oberkante 21 der Fahrzeugtür 2 benachbarte Position A verfahren. Die oberhalb der Türkarosserie 20 der Fahrzeugtür 2 in einer Lehre 6 vorgehaltene Fensterscheibe 1 wird anschließend mit ihrer Unterkante 11 in einen an der Oberkante 21 der Fahrzeugtür 2 ausgebildeten Schlitz in den Schacht der Türkarosserie 20 eingeführt und in die Mitnehmer 33, 34 eingesetzt.

Da in dieser oberen Position A ein Justieren und Einklemmen der Fensterscheibe 1 an den Befestigungspunkten 15, 16 in den Mitnehmern 33, 34 aufgrund der Konstruktion der Türkarosserie 20 nicht möglich ist, wird der Fensterheber 3 mittels des Fensterheberantriebs 30 und des Seils 39 in eine Justage- und Klemmposition B verfahren und dort die Unterkante 11 der Fensterscheibe 1 mit den Mitnehmern 33, 34 verbunden.

Zum exakten Ausrichten der Fensterscheibe 1 in Bezug auf die Fahrzeugtür 2 wird dann der Fensterheber 3 erneut in die obere Position A verfahren, so daß die Oberkante 12 und eine oder beide Seitenkanten 13, 14 der Fensterscheibe zur Anlage an die Lehre 6 kommen. In dieser Position wird die Fensterscheibe 1 nachjustiert und anschließend erneut die Justage- und Klemmposition B mittels des Fensterhebers 3 angefahren, in der die Unterkante 11 der Fensterscheibe 1 in die Mitnehmer 33, 34 eingeklemmt wird.

Mit einem erneuten Anfahren der oberen Positionen A kann die korrekte Ausrichtung der Fensterscheibe 1 in Bezug auf die Türkarosserie 20 bzw. Fahrzeugtür 2 überprüft werden. Ist die Ausrichtung der Fensterscheibe 1 nicht korrekt, wird erneut die gestrichelt dargestellte Justage- und Klemmposition B angefahren und die Fensterscheibe 1 durch Lösen der Klemmung der Unterkante 11 der Fensterscheibe 1 in den Mitnehmern 33, 34 nachjustiert und erneut mit den Mitnehmern 33, 34 des Fensterhebers 3 form- und/oder kraftschlüssig verbunden. Diese Montageschritte sind solange zu wiederholen, bis die Fensterscheibe 1 exakt ausgerichtet ist.

Der bekannte Montageprozeß gewährleistet somit keine sichere und lagegenaue Positionierung der Fensterscheibe 1 in Bezug auf die Fahrzeugtür 2 nach dem Einsetzen der Fensterscheibe 1 und einem einmaligen Anfahren der Justage- und Klemmposition B, so daß die Positionen A und B gegebenenfalls mehrmals angefahren werden müssen. Dies ist mit einem erhöhten Zeitaufwand zur exakten Einstellung und Ausrichtung der Fensterscheibe 1 verbunden.

Aufgabe der vorliegenden Erfindung ist es, den Montageprozeß zu vereinfachen und abzukürzen, so daß der Montage- und Einstellaufwand deutlich herabgesetzt, die Kosten des Montageprozesses reduziert und die Zykluszeiten erhöht werden.

Diese Aufgabe wird erfindungsgemäß durch ein Verfahren mit den Merkmalen des Anspruchs 1 gelöst.

Die erfindungsgemäße Lösung ermöglicht ein selbsttätiges Ausrichten der Fensterscheibe durch die Schwerkraft in der die Fensterscheibe vorhaltenden Lehre und durch einmaliges Anfahren der Justage- und Klemmposition mit einer Klemmung der Fensterscheibe in dieser Position, eine Senkung des Montage- und Einstellaufwandes und damit eine Kostenreduzierung des Montageprozesses sowie die Möglichkeit zur Verringerung der Zykluszeiten.

Die erfindungsgemäße Lösung geht von der Erkenntnis aus, daß bei der herkömmlichen Montage die Schwerkraft die Justage der Fensterscheibe in Bezug auf die Fahrzeugtür behindert, da keine die Position der Fensterscheibe haltenden aktiven Elemente vorhanden sind. Beim Verfahren des Fensterhebers in die bei normaler Stellung der Fahrzeugtür obere Position, das heißt beim Herausfahren der Fensterscheibe, sind die Justageelemente nicht zugänglich, so daß zwischen der Position, in der die Fensterscheibe vom Fensterheber aufgenommen und der Position, in der die Fensterscheibe justiert und eingeklemmt wird, gewechselt werden muß. Durch Umdrehen der Montagerichtung und eine "Auf-Kopf-Montage" wird die Schwerkraft sowohl zur selbsttätigen Ausrichtung der Fensterscheibe in einer die Fensterscheibe haltenden Lehre als auch zur Beibehaltung dieser Ausrichtung eingesetzt, so daß nur ein einmaliges Anfahren der Justage- und Klemmposition erforderlich ist.

Zum Verbinden der in der Lehre selbsttätig ausgerichteten Fensterscheibe mit den Halte- und Führungselementen des Fensterhebers werden die in der Lehre gehaltene Fensterscheibe und die Türkarosserie relativ zueinander bewegt, bis der oder die Befestigungspunkte der Fensterscheibe in der vorgegebenen Endposition, das heißt in der Justage- und Klemmposition, mit den Mitnehmern des Fensterhebers verbunden werden können. Diese Relativbewegung bei der Annäherung der Türkarosserie bzw. des in der Türkarosserie befestigten Fensterhebers und der Fensterscheibe kann durch alleiniges Anheben der in der Lehre gehaltenen Fensterscheibe, durch Absenken der Türkarosserie mit dem darin befestigten Fensterheber oder durch ein Absenken der Türkarosserie bei gleichzeitigem Anheben der Fensterscheibe bzw. der Lehre zum Halten der Fensterscheibe erfolgen.

Nach einer vorteilhaften Ausgestaltung der erfindungsgemäßen Lösung werden die Türkarosserie und die Lehre durch eine Führungseinrichtung in die "Auf-Kopf-Positionierung" gebracht, wobei die Führungseinrichtung den Weg der Annäherung von der Türkarosserie und der Fensterscheibe bis zum Erreichen der End- bzw. Justageposition bestimmt. Die Annäherung der Fensterscheibe und der Türkarosserie kann durch eine Bewegung der Lehre und/oder der Türkarosserie auf einer vorgegebenen Montagebahn erfolgen, so daß eine zuverlässige, reproduzierbare Bewegung der Türkarosserie und Fensterscheibe im Montageprozeß gewährleistet ist.

Die Fensterscheibe und Türkarosserie können vor der Montage lotrecht zueinander ausgerichtet werden, das heißt die Ebene der Fensterscheibe und der Türkarosserie bilden einen rechten Winkel mit der horizontalen Ebene oder dem Montageboden, so daß die Fensterscheibe lotrecht in den Türschacht eingeführt wird bzw. der Türschacht lotrecht die Fensterscheibe aufnimmt. Alternativ hierzu kann die "Auf-Kopf-Montage" gegenüber der horizontalen Ebene in einem Neigungswinkel der Fensterscheibe erfolgen, der kleiner als 90° ist, so daß die Montagebahn unter einem vorgegebenen Winkel gegenüber der horizontalen Ebene verläuft.

In einer vorteilhaften Weiterbildung des erfindungsgemäßen Verfahrens werden mehrere Fensterscheiben in ein mit Lehren versehenes Magazin eingesetzt und das Magazin im wesentlichen senkrecht zur Fördereinrichtung der Fahrzeugtür in die "Auf-Kopf-Position" zum darauffolgenden Verbinden der Fensterscheibe mit dem in der Türkarosserie befindlichen Fensterheber bewegt.

Durch das Vorhalten mehrerer Fensterscheiben mit den die Fensterscheiben haltenden und ausrichtenden Lehren in einem Magazin wird zum einen die Zykluszeit des Montageprozesses weiter verkürzt, da zum Vorhalten einer Fensterscheibe das Magazin lediglich um eine Einheit quer zur Förderrichtung der Fahrzeugtür weiterbewegt werden muß, und zum anderen wird eine kompakte Transporteinheit mit mehreren in dem Magazin zusammengefaßten Fensterscheiben geschaffen.

In einer Ausgestaltung des erfindungsgemäßen Verfahrens wird die Fensterscheibe vor der Verbindung mit ihrer Kantenkontur am oder im Bereich ihrer Oberkante in lösbare Befestigungsteile einer Hebeeinrichtung geklemmt. Dieses Vorhalten der Fensterscheibe in einer Vorrichtung nach Art eines "Gegen-Fensterhebers" verbindet das Halten und Ausrichten der Fensterscheibe mit der Führung der Fensterscheibe entlang der vorgegebenen Montagebahn, so daß der Montageprozeß weiter vereinfacht und zeitlich verkürzt wird.

Nach einem bevorzugten Montageverfahren wird der Fensterheber in die der Oberkante der Türkarosserie benachbarte Endlage verfahren und die Befestigungspunkte der Fensterscheibe mit den Befestigungselementen des Fensterhebers vorläufig verbunden und daran anschließend der Fensterheber mit der Fensterscheibe in eine Justageposition bewegt, in der die Fensterscheibe fest mit dem Fensterheber verbunden wird.

Werden die Fensterscheibe und/oder der Fensterheber so ausgebildet, daß beim Erreichen der Endposition vor dem Verbinden der Fensterscheibe mit dem Fensterheber durch Verringern des Abstandes zwischen Fensterscheibe und Fensterheber die Fensterscheibe selbsttätig mit dem Fensterheber verbunden wird, ist eine automatische Blindmontage der Fensterscheibe ohne zusätzliche Montagehandgriffe möglich, so daß die Montage weitestgehend automatisiert durchgeführt werden kann.

Nach Abschluß der Montage kann eine Funktionsprüfung insbesondere unter Einbeziehung der Lehre zum Vorhalten der Fensterscheibe durchgeführt werden, in der beispielsweise die Schließkraft und/oder die Überschußkraft des Fensterhebers ermittelt werden und in einem Prüfprotokoll festgehalten bzw. gegebenenfalls nachjustiert werden.

Eine Vorrichtung zum Verbinden einer Fensterscheibe mit einem in der Türkarosserie oder Fahrzeugtür angeordneten Fensterheber ist dadurch gekennzeichnet, daß die Fahrzeugtür mit einer Fördereinrichtung verbunden ist, die die Fahrzeugtür in einer um etwa 180° um eine durch die Fläche der Fahrzeugtür verlaufende Achse gedrehten Ausrichtung hält, daß die Fensterscheibe in einer Lehre angeordnet ist, die die Fensterscheibe in einer um etwa 180° um eine durch die Fläche der Fahrzeugtür verlaufenden Achse gedrehten Ausrichtung und unterhalb der Türkarosserie hält (Auf-Kopf-Stellungen), und daß eine Führungseinrichtung vorgesehen ist, die die Fensterscheibe und/oder die Türkarosserie in eine Montage-Endposition bewegt.

Die erfindungsgemäße Vorrichtung ermöglicht ebenfalls ein selbsttätiges Ausrichten der Fensterscheibe durch die Schwerkraft in der die Fensterscheibe vorhaltenden Lehre und durch einmaliges Anfahren der Justage- und Klemmposition mit einer Klemmung der Fensterscheibe in dieser Position eine Senkung des Montage- und Einstellaufwandes und damit eine Kostenreduzierung des Montageprozesses sowie die Möglichkeit zur Verringerung der Zykluszeiten.

Die Vorrichtung macht im wesentlichen von den für die Fahrzeugmontage vorhandenen Fördereinrichtungen Gebrauch, die lediglich dahingehend zu ergänzen sind, daß ein Drehen der Fahrzeugtür in die "Auf-Kopf-Position" möglich ist. Wird nach der Ausrichtung der Fensterscheibe und der Türkarosserie die in der Lehre gehaltene Fensterscheibe in den Türschacht eingeführt, ist keine weitere Änderung der Fördereinrichtung für die Türkarosserien erforderlich. Damit wird eine einfache und schnelle Montage mit geringen Montagekosten und verringerten Zykluszeiten geschaffen, ohne daß wesentliche Eingriffe in die Montageanlage erforderlich sind.

Vorzugsweise stützt die die Fensterscheibe haltende Lehre die Oberkante und/oder die Seitenkante der Fensterscheibe an mehreren Auflagepunkten ab, so daß eine sichere, reproduzierbare Ausrichtung der Fensterscheibe unter Einwirkung der Schwerkraft auch bei einer anschließenden Bewegung der aus Fensterscheibe und Lehre gebildeten Einheit durch Verschieben und/oder Verschwenken der Einheit in Richtung der Türkarosserie bzw. des Türschachtes gewährleistet ist.

In einer vorteilhaften Ausgestaltung der erfindungsgemäßen Vorrichtung besteht die Lehre aus einem formstabilen Werkstoff mit festen Bezugskanten in Form von Auflageflächen oder Anschlagkanten zur exakten Ausrichtung der Fensterscheibe, insbesondere aus Kunststoff, Aluminium oder geformtem Papier/geformter Pappe, so daß eine leichte und stabile Einheit aus Fensterscheibe und Lehre geschaffen wird, die sowohl der Erleichterung des Montageprozesses als auch einer leichten, bruchsicheren und stabilen Transportverpackung dient.

Mittels einer Einrichtung zur Aufnahme von Kennwerten oder Kennkurven des Fensterhebers, Prüfung der Funktion und/oder von Teilen des Fensterhebers sowie einer Einrichtung zum Vergleich der Prüfwerte mit vorgegebenen Grenz- oder Sollwerten kann die Montage mit zusätzlichen Maßnahmen zur Qualitätssicherung und Sicherheitsüberprüfung verbunden werden, die in der Auf-Kopf-Positionierung ohne das Erfordernis sonst notwendiger Prüf-, Aufnahme- und Haltevorrichtungen durchgeführt werden können. So kann beispielsweise die Einrichtung aus an der Lehre angeordneten Sensoren zur Messung der Schließkraft und/oder der Überschußkraft des Fensterhebers bestehen.

Weitere vorteilhafte Ausgestaltungen der erfindungsgemäßen Lösung sind den verbleibenden Unteransprüchen zu entnehmen.

Anhand eines in der Zeichnung dargestellten Ausführungsbeispiels soll der der Erfindung zugrundeliegende Gedanke näher erläutert werden. Es zeigen:
- Figur 1 -: eine Ausrichtung von Fensterscheibe und Türkarosserie vor und während der Montage nach dem Stand der Technik;
- Figur 2 -: eine schematisch-perspektivische Darstellung eines Förderbandes oder Kettenförderers für Fahrzeugtüren und eines Magazins zum Vorhalten von Fensterscheiben und
- Figur 3 -: eine Darstellung der Ausrichtung von Fensterscheibe und Türkarosserie in einer "Auf-Kopf-Positionierung" vor und während der Montage.

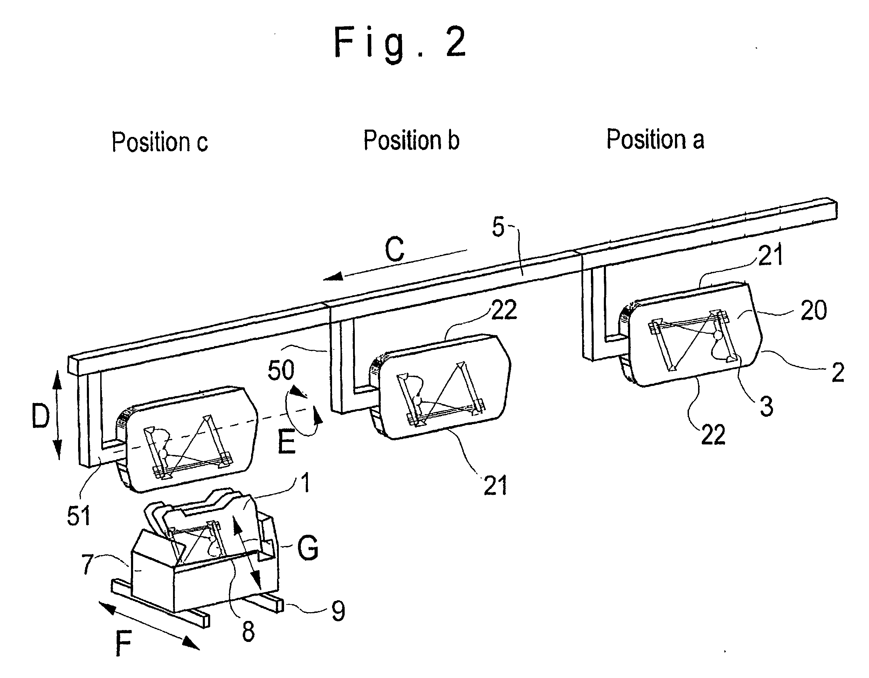

Figur 2 zeigt in schematisch-perspektivischer Darstellung eine Fördereinrichtung 5 für Fahrzeugtüren 2, die in Richtung des Pfeiles C bewegt werden. In einer ersten Montageposition (Position a) wird der Fensterheber 3 in die Türkarosserie 20 eingesetzt und mit dem Innen- oder einem Trägerblech der Fahrzeugtür 2 verbunden.

Nach der Montage des Fensterhebers 3 in der Türkarosserie 20 wird die Fahrzeugtür 2 in der Position b mittels eines Dreharmes 51 entsprechend dem Pfeil E um 180° um die Längsachse der Fahrzeugtür 2 2 gedreht, so daß sich die Unterkante 22 der Fahrzeugtür 2 oberhalb der Oberkante 21 befindet. Selbstverständlich kann das Drehen der Fahrzeugtür gegenüber der Einbaulage am Fahrzeug auch vor der Montage des Fensterhebers 3 erfolgen, so daß dieser ebenfalls in "Auf-Kopf-Lage" in die Türkarosserie 20 eingesetzt wird.

In der "Auf-Kopf-Position" steht die Türkarosserie 20 in der nachfolgenden Position c oberhalb eines mehrere Fensterscheiben 1 enthaltenden Magazins 7, das auf Führungsschiene9 9 in Pfeilrichtung F senkrecht zur Förderrichtung C der Fördereinrichtung 5 bewegt wird, so daß jeweils eine in einer "Auf-Kopf-Position" im Magazin 7 vorgehaltene Fensterscheibe 1 mit ihrer Unterkante unterhalb der Oberkante 21, das heißt unterhalb des in der Oberkante 21 der Türkarosserie 20 ausgebildeten Schlitzes angeordnet ist. Die Fensterscheiben 1 sind entweder in einer jeder Fensterscheibe 1 zugeordneten Lehre innerhalb des Magazins 7 gehalten bzw. das Magazin 7 ist so ausgebildet, daß es gleichzeitig Lehren für die darin angeordneten Fensterscheiben 1 bildet.

Mittels einer Hebeeinrichtung 8, die in Richtung des Pfeiles G beweglich ist, wird jeweils eine Fensterscheibe 1 angehoben und in den Türschacht der Türkarosserie 20 verlagert bis die Unterkante 11 der Fensterscheibe 1 in der Justage- und Klemmposition von den Mitnehmern des Fensterhebers 3 aufgenommen wird. In dieser Position kann manuell die Klemmung der Fensterscheibe 1 in den Mitnehmern des Fensterhebers 3 erfolgen bzw. bei einer selbsttätigen Aufnahme der Fensterscheibe 1 in den Mitnehmern des Fensterhebers 3 eine Blindmontage durchgeführt werden.

Nach der Verbindung einer Fensterscheibe 1 mit dem Fensterheber 3 einer Türkarosserie 20 wird die Fördereinrichtung 5 in Richtung des Pfeiles C weiterbewegt und führt die nächste Türkarosserie zur Montageposition. Gleichzeitig wird das Magazin 7 auf den Führungsschienen 9 quer zur Förderrichtung entlang des Pfeiles F bewegt, so daß die nächste Fensterscheibe 1 unterhalb des Türschachtes der betreffenden Fahrzeugtür 2 angeordnet wird und der vorstehend beschriebene Montageschritt erneut durchgeführt werden kann.

Alternativ zum Anheben der Fensterscheiben 1 mittels einer Hebeeinrichtung 8 zur Überführung der Fensterscheibe 1 in die Justage- und Klemmposition kann die Fördereinrichtung 5 mittels eines Hebe- und Senkarmes 50 in Pfeilrichtung D bewegt werden, so daß die Fahrzeugtür 2 an die Justage- und Klemmposition angenähert wird. Wahlweise ist auch eine Kombination beider Hebeeinrichtungen möglich, so daß sowohl die Fensterscheibe 1 mittels der Hebeeinrichtung 8 angehoben als auch die betreffende Fahrzeugtür 2 mittels des Hebe- und Senkarmes 50 abgesenkt wird.

Die Fensterscheiben 1 befinden sich in dem Magazin 7 in der "Auf-Kopf-Position", in die sie unmittelbar vor der Montage durch einen Monteur gebracht werden, der die Fensterscheiben in eine Lehre mit vorzugsweise drei Auflagepunkten einsetzt, so daß die Fensterscheiben 1 in Montagerichtung ausgerichtet werden. Alternativ hierzu können mehrere Fensterscheiben 1 in einem Magazin 7 "auf Kopf" als Montageeinheit angeliefert werden und das Magazin wird auf die Führungsschienen 9 aufgesetzt. Die weitere Förderung des Magazins 7 kann dann ebenso vollautomatisch erfolgen wie das Anheben der Fensterscheiben mittels der Hebeeinrichtung 8.

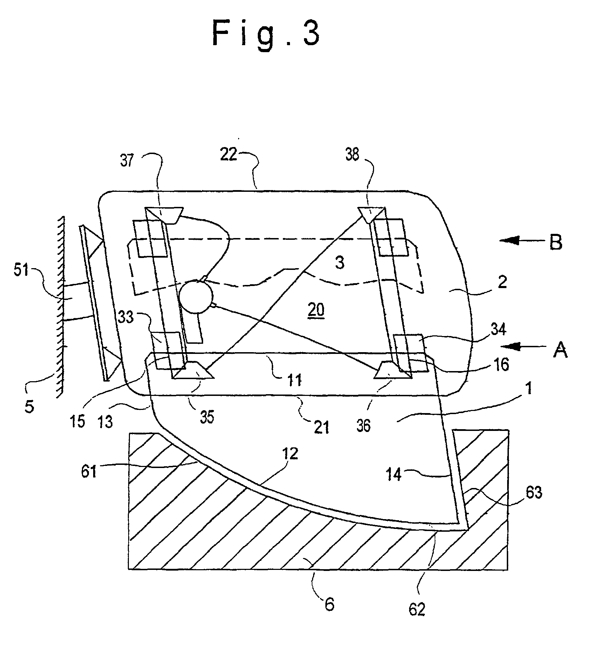

Figur 3 verdeutlicht die "Auf-Kopf-Montage" in einer schematischen Darstellung und zeigt die mittels des Dreharmes 51 der Fördereinrichtung 5 in der "Auf-Kopf-Position" gehaltene Fahrzeugtür 2, so daß die in der Anbauposition am Fahrzeug obere Kante 21 der Türkarosserie 20 unterhalb der Unterkante 22 der Türkarosserie 20 angeordnet ist. Der mit der Türkarosserie 20 verbundene Fensterheber 3 mit den in Führungsschienen 31, 32 geführten Mitnehmern 33, 34 sowie Umlenkrollen 35 bis 38, einem Fensterheberantrieb 30 und einem Fensterheberseil 39 befindet sich mit der Türkarosserie 20 ebenfalls in "Auf-Kopf-Stellung".

Die Fensterscheibe 1 wird in eine Lehre 6 eingesetzt, die so ausgebildet ist, daß infolge der Schwerkraft die Oberkante 12 und wenigstens eine der Seitenkanten 13, 14 an Auflagekanten oder Punkte 61 bis 63 der Lehre 6 anliegen und so die Fensterscheibe 1 in einer vorgegebenen Position ausrichten. In dieser Position wird die Fensterscheibe 1 in der Lehre 6 vorgehalten bis die Fahrzeugtür 2 eine Sollposition erreicht hat, in der der Fahrzeugschacht in der Türkarosserie 20 auf die Fensterscheibe 1 ausgerichtet ist.

Durch senkrechtes Verfahren der Fensterscheibe 1 mit der Lehre 6 und/oder der Fahrzeugtür 2 wird der Abstand zwischen der Unterkante 11 der Fensterscheibe 1 und den in der oberen (in Montagestellung unteren) Position des Fensterhebers 3 befindlichen Mitnehmern 33, 34 verringert bis in der Justage- und Klemmposition A die Befestigungspunkte 15, 16 der Fensterscheibe 1 kraft- und/oder formschlüssig an den Mitnehmern 33, 34 des Fensterhebers 3 festgelegt werden.

Anschließend kann der Fensterheber 3 3 in die Position B verfahren werden, so daß sich die Fensterscheibe 1 in der gestrichelten Position befindet. In dieser Position ist die Fensterscheibe 1 aus der Lehre 6 herausgehoben, die anschließend mittels der in Figur 2 dargestellten Hebeeinrichtung 8 in die Ausgangslage zurückgefahren werden kann.

Vor dem Trennen der Fensterscheibe 1 von der Lehre 6 können zusätzliche Funktionsprüfungen, Kennwert- oder Kennkurvenaufnahmen sowie Vergleiche aufgenommener Werte oder Kurven mit vorgegebenen Grenz- oder Sollwerten durchgeführt werden. Beispielsweise kann die Schließkraft und/oder Überschußkraft des Fensterhebers 3 geprüft und gegebenenfalls mit Vorgabewerten verglichen werden.

Gleichzeitig kann auch die feste Klemmung der Fensterscheibe 1, das heißt die Verbindung der Befestigungspunkte 15, 16 der Fensterscheibe 1 mit den Mitnehmern 33, 34 einer Überprüfung unterzogen werden. Da sich die Fensterscheibe 1 unterhalb der Fahrzeugtür 2 befindet, würde eine unzureichende Klemmung der Fensterscheibe 1 in den Mitnehmern 33, 34 beim Anfahren der Position B zu einem Lösen der Befestigungspunkte 15, 16 aus den Mitnehmern 33, 34 aufgrund der Schwerkraft bewirken und die Fensterscheibe 1 in der Lehre 6 verbleiben.

## Patentansprüche

1. Verfahren zum Verbinden einer Fensterscheibe mit einem in der Türkarosserie einer Fahrzeugtür angeordneten Fensterheber,
**dadurch gekennzeichnet,**
**daß** die Fahrzeugtür (2) und die Fensterscheibe (1) vor der Verbindung um etwa 180° um eine durch die Fläche der Fahrzeugtür verlaufende Achse gedreht mit unterhalb der Türkarosserie (20) angeordneter Fensterscheibe (1) positioniert werden (Auf-Kopf-Stellung), daß die Türkarosserie (20) und die Fensterscheibe (1) zur Verbindung mindestens eines Befestigungspunktes (15, 16) der Fensterscheibe (1) mit mindestens einem Befestigungselement (33, 34) in der Türkarosserie (20) zueinander ausgerichtet werden (Auf-Kopf-Positionierung) und daß der Abstand zwischen dem Befestigungspunkt (15, 16) und dem Befestigungselement (33, 34) bis zum Erreichen einer vorgegebenen Endposition verringert wird (Auf-Kopf-Montage).

2. Verfahren nach Anspruch 1, **dadurch gekennzeichnet, daß** die Fensterscheibe (1) in der Auf-Kopf-Stellung in einer Lehre (6) gehalten wird und daß die Türkarosserie (20) und die Lehre (6) zueinander bewegt werden bis der wenigstens eine Befestigungspunkt (15, 16) der Fensterscheibe (1) die vorgegebene Sollposition in der Türkarosserie (20) erreicht hat.

3. Verfahren nach Anspruch 2, **dadurch gekennzeichnet, daß** die Türkarosserie (20) und die Lehre (6) durch eine Führungseinrichtung in die Auf-Kopf-Positionierung gebracht werden und daß die Führungseinrichtung den Weg der Annäherung von der Türkarosserie (20) und der Fensterscheibe (1) bis zum Erreichen der Endposition bestimmt.

4. Verfahren nach einem der vorangehenden Ansprüche, **dadurch gekennzeichnet, daß** die Annäherung von Fensterscheibe (1) und Türkarosserie (20) durch eine Bewegung der Lehre (6) und/oder der Türkarosserie (20) auf einer vorgegebenen Montagebahn erfolgt.

5. Verfahren nach einem der vorangehenden Ansprüche, **dadurch gekennzeichnet, daß** die Auf-Kopf-Montage gegenüber der horizontalen Ebene in einem Neigungswinkel der Fensterscheibe (1) erfolgt, der kleiner als 90° ist.

6. Verfahren nach einem der vorangehenden Ansprüche, **dadurch gekennzeichnet, daß** vor dem Verbinden der Fensterscheibe (1) mit dem Fensterheber (3) die Fahrzeugtür (2) durch eine die Fahrzeugtür (2) aufnehmende Fördereinrichtung in eine erste vorgegebene Sollposition bewegt wird, daß die Fensterscheibe (1) in eine die Fensterscheibe (1) an deren Oberkante (12) und/oder zumindest einer Seitenkante (13, 14) aufnehmende Führungseinrichtung in eine zweite Sollposition bewegt wird, und daß nach dem Verbinden der Fensterscheibe (1) mit dem Fensterheber (3) die Führungseinrichtung von der Fensterscheibe (1) getrennt wird.

7. Verfahren nach Anspruch 6, **dadurch gekennzeichnet, daß** die Fensterscheibe (1) vor der Verbindung in eine die Fensterscheibe (1) an mindestens drei voneinander getrennten Punkten (61, 62, 63) berührende Lehre (6) eingesetzt wird.

8. Verfahren nach Anspruch 7, **dadurch gekennzeichnet, daß** mehrere Fensterscheiben (1) in ein mit Lehren (6) versehenes Magazin eingesetzt werden und das Magazin im wesentlichen senkrecht zur Fördereinrichtung der Fahrzeugtür (2) in die zweite Sollposition bewegt wird.

9. Verfahren nach einem der vorangehenden Ansprüche, **dadurch gekennzeichnet, daß** die Fensterscheibe (1) vor der Verbindung in ihrer Kantenkontur (12, 13, 14) am oder im Bereich ihrer Oberkante (12) in lösbare Befestigungsteile einer Hebeeinrichtung geklemmt wird.

10. Verfahren nach mindestens einem der vorangehenden Ansprüche, **dadurch gekennzeichnet, daß** der Fensterheber (3) in die der Oberkante (21) der Türkarosserie (20) benachbarte Endlage verfahren und der bzw. die Befestigungspunkte (15, 16) der Fensterscheibe (1) mit dem bzw. den Befestigungselementen (33, 34) des Fensterhebers (3) vorläufig verbunden wird, und daß der Fensterheber (3) mit der Fensterscheibe (1) in eine Justageposition (B) verfahren und die Fensterscheibe (1) in der Justageposition (B) fest mit dem Fensterheber (3) verbunden wird.

11. Verfahren nach mindestens einem der vorangehenden Ansprüche, **dadurch gekennzeichnet, daß** die Fensterscheibe (1) und/oder der Fensterheber (3) so ausgebildet ist (sind), daß beim Erreichen der Endposition durch Verringern des Abstandes zwischen der Fensterscheibe (1) und dem Fensterheber (3) die Fensterscheibe (1) selbsttätig mit dem Fensterheber (3) verbunden wird.

12. Verfahren nach einem der vorangehenden Ansprüche, **dadurch gekennzeichnet, daß** nach Abschluß der Montage eine Funktionsprüfung des Fensterhebers (3) erfolgt.

13. Verfahren nach Anspruch 12, **dadurch gekennzeichnet, daß** die Funktionsprüfung des Fensterhebers (3) unter Einbeziehung der Lehre (6) erfolgt.

14. Verfahren nach Anspruch 12 oder 13, **dadurch gekennzeichnet, daß** die Schließkraft und/oder die Überschußkraft des Fensterhebers (3) ermittelt werden.

15. Vorrichtung zum Verbinden einer Fensterscheibe mit einem in der Türkarosserie einer Fahrzeugtür angeordneten Fensterheber,
**dadurch gekennzeichnet,**
**daß** die Fahrzeugtür (2) mit einer Fördereinrichtung verbunden ist, die die Fahrzeugtür (2) in einer um etwa 180° um eine durch die Fläche der Fahrzeugtür (2) verlaufende Achse gedrehten Ausrichtung hält, daß die Fensterscheibe (1) in einer Lehre (6) angeordnet ist, die die Fensterscheibe (1) in einer um etwa 180° um eine durch die Fläche der Fahrzeugtür (2) verlaufenden Achse gedrehten Ausrichtung und unterhalb der Türkarosserie (20) hält (Auf-Kopf-Stellungen), und daß eine Führungseinrichtung vorgesehen ist, die die Fensterscheibe (1) und/oder die Türkarosserie (20) in eine Montage-Endposition bewegt.

16. Vorrichtung nach Anspruch 15, **dadurch gekennzeichnet, daß** in der Montage-Endposition mindestens ein Befestigungspunkt (15, 16) der Fensterscheibe (1) mit einem Befestigungselement (35, 36) in der Türkarosserie (20) verbindbar ist.

17. Vorrichtung nach Anspruch 15 oder 16, **dadurch gekennzeichnet, daß** die Lehre (6) die Oberkante (12) und/oder die Seitenkanten (13, 14) der Fensterscheibe (1) an mehreren Auflagepunkten (61, 63) abstützt.

18. Vorrichtung nach Anspruch 17, **dadurch gekennzeichnet, daß** mehrere Lehren (6) mit darin ausgerichteten Fensterscheiben (1) parallel zueinander angeordnet zu einem Magazin zusammengefaßt sind.

19. Vorrichtung nach Anspruch 17 oder 18, **dadurch gekennzeichnet, daß** die Lehre (6) aus einem formstabilen Werkstoff, vorzugsweise aus Kunststoff, Aluminium oder geformten Papier/Pappe besteht.

20. Vorrichtung nach Anspruch 19, **dadurch gekennzeichnet, daß** die Lehre (6) Teil einer Transport-Verpackung der Fensterscheibe (1) ist.

21. Vorrichtung nach Anspruch 16 oder 17, **dadurch gekennzeichnet, daß** die Lehre (6) aus einer die Fensterscheibe (1) nach Art eines Fensterhebers einklemmende Hebeeinrichtung besteht.

22. Vorrichtung nach einem der vorangehenden Ansprüche 15 bis 21, **dadurch gekennzeichnet, daß** die Führungseinrichtung Teil der Lehre (6) ist.

23. Vorrichtung nach einem der vorangehenden Ansprüche 15 bis 21, **dadurch gekennzeichnet, daß** die Führungseinrichtung Teil der Fördereinrichtung ist.

24. Vorrichtung nach einem der vorangehenden Ansprüche 15 bis 23, **dadurch gekennzeichnet, daß** die Türkarosserie (20) von einer horizontal beweglichen und die Türkarosserie (20) in die Auf-Kopf-Position schwenkbaren Fördereinrichtung gehalten ist und daß die Lehre (6) zumindest vertikal verschiebbar ausgebildet ist.

25. Vorrichtung nach einem der vorangehenden Ansprüche 15 bis 24, **dadurch gekennzeichnet, daß** die Türkarosserie (20) in einer horizontal und vertikal beweglichen, die Türkarosserie (20) in die Auf-Kopf-Position schwenkbaren Fördereinrichtung gehalten ist.

26. Vorrichtung nach einem der vorangehenden Ansprüche 15 bis 25, **gekennzeichnet durch** eine Einrichtung zur Aufnahme von Kennwerten oder Kennkurven des Fensterhebers.

27. Vorrichtung nach einem der vorangehenden Ansprüche 15 bis 26, **gekennzeichnet durch** eine Einrichtung zur Prüfung der Funktion und/oder von Teilen des Fensterhebers.

28. Vorrichtung nach Anspruch 27, **gekennzeichnet durch** eine Einrichtung zum Vergleich der Prüfwerte mit vorgegebenen Grenz- oder Sollwerten.

29. Vorrichtung nach einem der vorangehenden Ansprüche 26 bis 28, **dadurch gekennzeichnet, daß** die Einrichtung aus an der Lehre (6) angeordneten Sensoren zur Messung der Schließkraft und/oder der Überschußkraft des Fensterhebers besteht.

30. Vorrichtung nach Anspruch 29, **dadurch gekennzeichnet, daß** die Sensoren an den Fixierpunkten der Lehre (6) angeordnet sind.

## Claims

1. Method for connecting a window pane to a window lifter mounted in the door body of a vehicle door,
**characterised in that**
the vehicle door (2) and the window pane (1) are prior to connection positioned turned 180° degrees about an axis running through the surface area of the vehicle door, with the window pane (1) arranged underneath the door body (20) (upside down position), that the door body (20) and the window pane (1) are aligned relative to each other (upside down position) for connecting at least one fastening point (15, 16) of the window pane (1) to at least one fastening element (33, 34) in the door body (20), and that the distance between the fastening point (15, 16) and the fastening element (33, 34) is reduced until reaching a predetermined end position (upside down assembly).

2. Method according to claim 1 **characterised in that** the window pane (1) is held in the upside down position in a jig (6) and that the door body (20) and jig (6) are moved relative to each other until the at least one fastening point (15, 16) of the window pane (1) has reached the predetermined ideal position in the door body (20).

3. Method according to claim 2 **characterised in that** the door body (20) and the jig (6) are brought by a guide device into the upside down position and that the guide device determines the path for the door body (20) and the window pane (1) to approach each other until reaching the end position.

4. Method according to one of the preceding claims **characterised in that** the window pane (1) and door body (20) are moved up to each other by the movement of the jig (6) and/or the door body (20) on a predetermined assembly path.

5. Method according to one of the preceding claims **characterised in that** the upside down assembly is carried out relative to the horizontal plane in an incline angle of the window pane (1) which is less than 90°.

6. Method according to one of the preceding claims **characterised in that** prior to connecting the window pane (1) to the window lifter (3) the vehicle door (2) is moved through a conveyor device holding the vehicle door (2) into a first predetermined ideal position, that the window pane (1) is moved into a guide device holding the window pane (1) at its upper edge (12) and/or at least a side edge (13, 14) into a second ideal position, and that after connecting the window pane (1) to the window lifter (3) the guide device is separated from the window pane (1).

7. Method according to claim 6 **characterised in that** the window pane (1) prior to connection is inserted into a jig (6) which contacts the window pane (1) at at least three separate points (61, 62, 63).

8. Method according to claim 7 **characterised in that** several window panes (1) are inserted in a magazine provided with jigs (6) and the magazine is moved substantially perpendicular to the conveyor device of the vehicle door (2) into the second ideal position.

9. Method according to one of the preceding claims **characterised in that** the window pane (1) prior to connection in its edge contour (12, 13, 14) on or in the region of its upper edge (12) is clamped into detachable fastening parts of a lifting device.

10. Method according to at least one of the preceding claims **characterised in that** the window lifter (3) is moved into the end position adjoining the upper edge (21) of the door body (20) and the or each fastening point (15, 16) of the window pane (1) is provisionally connected to the or each fastening element (33, 34) of the window lifter (3) and that the window lifter (3) is moved with the window pane (1) into an adjusting position (B) and the window pane (1) is connected in the adjusting position (B) fixedly to the window lifter (3).

11. Method according to at least one of the preceding claims **characterised in that** the window pane (1) and/or window lifter (3) is formed so that on reaching the end position by reducing the distance between the window pane (1) and the window lifter (3) the window pane (1) is connected automatically to the window lifter (3).

12. Method according to one of the preceding claims **characterised in that** at the end of assembly a function check is carried out on the window lifter (3).

13. Method according to claim 12 **characterised in that** the function check on the window lifter (3) is carried out by incorporating the jig (6).

14. Method according to claim 12 or 13 **characterised in that** the closing force and /or the excess force of the window lifter (3) are determined.

15. Device for connecting a window pane to a window lifter mounted in the door body of a vehicle door, **characterised in that** the vehicle door (2) is connected to a conveyor device which holds the vehicle door (2) in an alignment turned roughly 180° about an axis running through the surface area of the vehicle door (2), that the window pane (1) is mounted in a jig (6) which holds the window pane (1) in an alignment turned roughly 180° about an axis running through the surface area of the vehicle door (2) and underneath the door body (20) (upside down positions), and that a guide device is provided which moves the window pane (1) and/or the door body (20) into an assembly end position.

16. Device according to claim 15 **characterised in that** in the assembly end position at least one fastening point (15, 16) of the window pane (1) is connectable to a fastening element (35, 36) in the door body (20).

17. Device according to claim 15 or 16 **characterised in that** the jig (6) supports the upper edge (12) and/or the side edges (13, 14) of the window pane (1) at several contact bearing points (61, 63).

18. Device according to claim 17 **characterised in that** several jigs (6) are combined into one magazine with the aligned window panes (1) parallel to each other.

19. Device according to claim 17 or 18 **characterised in that** the jig (6) is made of a shape-stable material, preferably of plastics, aluminium or moulded paper/board.

20. Device according to claim 19 **characterised in that** the jig (6) is part of a transport packing of the window pane (1).

21. Device according to claim 16 or 17 **characterised in that** the jig (6) comprises a lifting device which clamps the window pane (1) in the manner of a window lifter.

22. Device according to one of the preceding claims 15 to 21 **characterised in that** the guide device is part of the jig (6).

23. Device according to one of the preceding claims 15 to 21 **characterised in that** the guide device is part of the conveyor device.

24. Device according to one of the preceding claims 15 to 23 **characterised in that** the door body (20) is held by a horizontal movable conveyor device which is capable of swivelling the door body (20) into the upside down position and that the jig (6) is formed at least vertically displaceable.

25. Device according to one of the preceding claims 15 to 24 **characterised in that** the door body (20) is held in a horizontally and vertically movable conveyor device which can swivel the door body (20) into the upside down position.

26. Device according to one of the preceding claims 15 to 25 **characterised by** a device for picking up characteristic values or characteristic curves of the window lifter.

27. Device according to one of the preceding claims 15 to 26 **characterised by** a device for checking the function and/or parts of the window lifter.

28. Device according to claim 27 **characterised by** a device for comparing test values with predetermined limit or ideal values.

29. Device according to one of the preceding claims 26 to 28 **characterised in that** the device consists of sensors mounted on the jig (6) for measuring the closing force and/or the excess force of the window lifter.

30. Device according to claim 29 **characterised in that** the sensors are mounted on the fixing points of the jig (6).

## Revendications

1. Procédé pour relier un panneau de fenêtre à un lève-vitre agencé dans la carrosserie d'une portière de véhicule, **caractérisé en ce que** :
- la portière du véhicule (2) et le panneau de fenêtre (1) sont positionnés avec le panneau de fenêtre (1) agencé sous la carrosserie (20) de la portière (position tête en bas), en étant tournés avant la liaison d'environ 180° autour d'un axe qui traverse la surface de la portière du véhicule ;
- la carrosserie (20) de la portière et le panneau de fenêtre (1) sont orientés l'un par rapport à l'autre pour la liaison d'au moins un point de fixation (15, 16) du panneau de fenêtre (1) à au moins un élément de fixation (33, 34) dans la carrosserie (20) de la portière (positionnement tête en bas) ; et
- la distance entre le point de fixation (15, 16) et l'élément de fixation (33, 34) est diminué jusqu'à obtention d'une position finale prescrite (montage tête en bas).

2. Procédé selon la revendication 1, **caractérisé en ce que** le panneau de fenêtre (1) est maintenu dans la position tête en bas dans un gabarit (6) et **en ce que** la carrosserie (20) de la portière et le gabarit (6) sont déplacés l'un par rapport à l'autre jusqu'à ce que ledit au moins un point de fixation (15, 16) du panneau de fenêtre (1) ait atteint la position de consigne prescrite dans la carrosserie (20) de la portière.

3. Procédé selon la revendication 2, **caractérisé en ce que** la carrosserie (20) de la portière et le gabarit (6) sont amenés dans le positionnement tête en bas via un dispositif de guidage et **en ce que** le dispositif de guidage détermine le chemin de l'approche de la carrosserie (20) de la portière et du panneau de fenêtre (1) jusqu'à obtention de la position finale.

4. Procédé selon l'une des revendications précédentes, **caractérisé en ce que** l'approche du panneau de fenêtre (1) et de la carrosserie (20) de la portière est exécutée par un mouvement du gabarit (6) et/ou de la carrosserie (20) de la portière sur une trajectoire de montage prescrite.

5. Procédé selon l'une des revendications précédentes, **caractérisé en ce que** le montage tête en bas est exécuté sous un angle d'inclinaison du panneau de fenêtre (1), inférieur à 90° par rapport au plan horizontal.

6. Procédé selon l'une des revendications précédentes, **caractérisé en ce que** :
- avant la liaison du panneau de fenêtre (1) au lève-vitre (3), la portière de véhicule (2) est déplacée jusque dans une première position de consigne prescrite via un dispositif de convoyage qui réceptionne la portière de véhicule (2) ;
- le panneau de fenêtre (1) est déplacé jusque dans une seconde position de consigne dans un dispositif de guidage qui réceptionne le panneau de fenêtre (1) sur son rebord supérieur (12) et/ou au moins un de ses rebords latéraux (13, 14) ; et
- après la liaison du panneau de fenêtre (1) au lève-vitre (3), le dispositif de guidage est séparé du panneau de fenêtre (1).

7. Procédé selon la revendication 6, **caractérisé en ce que**, avant la liaison, le panneau de fenêtre (1) est mis en place dans un gabarit (6) qui contacte le panneau de fenêtre (1) en au moins trois points (61, 62, 63) séparés les uns des autres.

8. Procédé selon la revendication 7, **caractérisé en ce que** plusieurs panneaux de fenêtre (1) sont mis en place dans un magasin avec plusieurs gabarits (6) et **en ce que** le magasin est déplacé jusque dans la seconde position de consigne, essentiellement perpendiculairement au dispositif de convoyage de la portière de véhicule (2).

9. Procédé selon l'une des revendications précédentes, **caractérisé en ce que** le panneau de fenêtre (1) est coincé avant la liaison dans son contour de rebord (12, 13, 14) sur ou dans la zone de son rebord supérieur (12) dans des pièces de fixation détachables d'un dispositif de levage.

10. Procédé selon l'une des revendications précédentes, **caractérisé en ce que** :
- le lève-vitre (3) est déplacé dans la position finale avoisinante au rebord supérieur (21) de la carrosserie (20) de la portière et le(s) point(s) de fixation (15, 16) du panneau de fenêtre (1) est (sont) relié(s) provisoirement au(x) point(s) de fixation (33, 34) du lève-vitre (3) ; et
- le lève-vitre (3) est déplacé avec le panneau de fenêtre (1) jusque dans une position d'ajustement (B) et le panneau de fenêtre (1) est relié solidairement au lève-vitre (3) dans la position d'ajustement (B).

11. Procédé selon au moins une des revendications précédentes, **caractérisé en ce que** le panneau de fenêtre (1) et/ou le lève-vitre (3) est (sont) réalisé(s) de sorte que le panneau de fenêtre (1) est relié automatiquement au lève-vitre (3), lorsque la position finale est atteinte par la diminution de la distance entre le panneau de fenêtre (1) et le lève-vitre (3).

12. Procédé selon l'une des revendications précédentes, **caractérisé en ce qu'**un contrôle de fonctionnement du lève-vitre (3) est exécuté après l'achèvement du montage.

13. Procédé selon la revendication 12, **caractérisé en ce que** le contrôle de fonctionnement du lève-vitre (3) est exécuté en utilisant le gabarit (6).

14. Procédé selon l'une ou l'autre des revendications 12 et 13, **caractérisé en ce que** la force de fermeture et/ou la force excédentaire du lève-vitre (3) est (sont) détectée(s).

15. Dispositif pour relier un panneau de fenêtre à un lève-vitre agencé dans la carrosserie d'une portière de véhicule, **caractérisé en ce que** :
- la portière du véhicule (2) est reliée à un dispositif de convoyage qui maintient la portière du véhicule (2) dans une orientation tournée d'environ 180° autour d'un axe qui traverse la surface de la portière du véhicule (2) ;
- le panneau de fenêtre (1) est agencé dans un gabarit (6) qui maintient le panneau de fenêtre (1) dans une orientation tournée d'environ 180° autour d'un axe qui traverse la surface de la portière du véhicule (2) et en dessous de la carrosserie (20) de la portière (positions tête en bas) ; et
- il est prévu un dispositif de guidage qui déplace le panneau de fenêtre (1) et/ou la carrosserie (20) de la portière jusque dans une position finale de montage.

16. Dispositif selon la revendication 15, **caractérisé en ce que**, dans la position finale de montage, au moins un point de fixation (15, 16) du panneau de fenêtre (1) peut être relié à un élément de fixation (35, 36) dans la carrosserie (20) de la portière.

17. Dispositif selon l'une ou l'autre des revendications 15 et 16, **caractérisé en ce que** le gabarit (6) soutient le rebord supérieur (12) et/ou les rebords latéraux (13, 14) du panneau de fenêtre (1) en plusieurs points d'appui (61, 63).

18. Dispositif selon la revendication 17, **caractérisé en ce que** plusieurs gabarits (6) agencés parallèlement les uns par rapport aux autres sont regroupés en un magasin avec les panneaux de fenêtre (1) qui y sont logés.

19. Dispositif selon l'une ou l'autre des revendications 17 et 18, **caractérisé en ce que** le gabarit (6) se compose d'un matériau de forme stable, de préférence en matière plastique, en aluminium ou en papier/carton moulé.

20. Dispositif selon la revendication 19, **caractérisé en ce que** le gabarit (6) fait partie d'un emballage de transport du panneau de fenêtre (1).

21. Dispositif selon l'une ou l'autre des revendications 16 et 17, **caractérisé en ce que** le gabarit (6) se compose d'un dispositif de levage qui coince le panneau de fenêtre (1) à la manière d'un lève-vitre.

22. Dispositif selon l'une des revendications précédentes 15 à 21, **caractérisé en ce que** le dispositif de guidage fait partie du gabarit (6).

23. Dispositif selon l'une des revendications précédentes 15 à 21, **caractérisé en ce que** le dispositif de guidage fait partie du dispositif de convoyagé.

24. Dispositif selon l'une des revendications précédentes 15 à 23, **caractérisé en ce que** la carrosserie (20) de la portière est maintenue par un dispositif de convoyage mobile horizontalement ou orientable dans la position tête en bas et **en ce que** le gabarit (6) est réalisé déplaçable au moins verticalement.

25. Dispositif selon l'une des revendications précédentes 15 à 24, **caractérisé en ce que** la carrosserie (20) de la portière est maintenue par un dispositif de convoyage mobile horizontalement et verticalement ou orientable dans la position tête en bas.

26. Dispositif selon l'une des revendications précédentes 15 à 25, **caractérisé par** un dispositif pour enregistrer des valeurs caractéristiques ou des courbes caractéristiques du lève-vitre.

27. Dispositif selon l'une des revendications précédentes 15 à 26, **caractérisé par** un dispositif pour contrôler le fonctionnement et/ou des pièces du lève-vitre.

28. Dispositif selon la revendication 27, **caractérisé par** un dispositif pour comparer les valeurs de contrôle à des valeurs de consigne ou des valeurs limites prescrites.

29. Dispositif selon l'une des revendications précédentes 26 à 28, **caractérisé en ce que** le dispositif se compose de capteurs agencés sur le gabarit (6) pour mesurer la force de fermeture et/ou la force excédentaire du lève-vitre.

30. Dispositif selon la revendication 29, **caractérisé en ce que** les capteurs sont agencés au niveau des points de fixation du gabarit (6).
